# EUROPEAN PATENT SPECIFICATION

(11) **EP 3 732 116 B1**
(45) Date of publication and mention of the grant of the patent: **13.09.2023**
(21) Application number: 18816092.3
(22) Date of filing: 17.12.2018
(51) Int. Cl.: B65D 85/804

(54) **SYSTEM FOR FLEXIBLE FOOD OR BEVERAGE PACKS**
SYSTEM FÜR FLEXIBLE LEBENSMITTEL- ODER GETRÄNKEVERPACKUNGEN
SYSTÈME POUR DES EMBALLAGES DE PRODUITS ALIMENTAIRES OU DE BOISSONS SOUPLES

(30) Priority: 27.12.2017 EP 17210605
(43) Date of publication of application: 04.11.2020
(73) Proprietor: Société des Produits Nestlé S.A., 1800 Vevey (CH)
(72) Inventor: NOTH, André, 1009 Pully (CH); JARISCH, Christian, 1095 Lutry (CH); TALON, Christian, 1134 Vufflens-le-Château (CH)
(74) Representative: Navarro Fernández, Maria Isabel
(86) International application number: PCT/EP2018/085237
(87) International publication number: WO 2019/129525

(56) References cited:
- WO-A1-2011/054402
- WO-A1-2016/016074
- WO-A1-2016/020198
- WO-A1-2017/125267
- WO-A1-2017/137371

## Description

### Field of the invention

The present invention relates to a system for flexible food or beverage packs, in particular to a system detecting the piercing and/or the positioning of a fitment assembly that can move and adopt multiple orientations or positioning within the flexible pack.

### Background of the invention

Preparing beverages by introducing a capsule containing a food or beverage ingredient, such as ground coffee or instant coffee, in a beverage dispensing machine and injecting water into the capsule is known in the state of the art: the beverage or food ingredient is typically extracted or dissolved into water to form the beverage or the desired final product, which flows out of the capsule through a suitable outlet.

As such, different capsules have been developed in the past, these capsules being at least differentiated by the nature of the capsule body used for storing the food or the beverage ingredient. While most of the capsules are made of a rigid body or semi-rigid body, typically made though injection moulding or thermoforming, flexible types of packs can be made out of foil materials. Flexible packs have generally the advantage to semi-rigid and rigid capsules that less amount of material is used to pack the product which leads to overall less production cost, to lower life cycle impact shown in several life-cycle assessments and to advantages on the part of the user, who will need less available space for storing these packs, as they are more compact.

It is known in the state of the art, for example as per document WO 99/05044, a flexible beverage-producing sachet comprising a beverage ingredient in a volume formed by bonding two laminates at their edges, having a base seam into which a conduit of rigid plastics is bonded. An inlet nozzle is provided at the top of the resulting sachet for introducing water that is mixed with the beverage or food ingredient inside the inner volume of the sachet, the beverage produced being then evacuated through a beverage outlet arranged at the bottom of the pack, where closing means are provided, such that the closing means are adapted to open under pressure when pressurized water is introduced into the sachet, allowing the beverage to evacuate through the beverage outlet.

Other flexible sachets are known in the art having a container where a fitment assembly or spout is arranged on one of its edges, typically on the lower edge. Moreover, this spout is overwrapped by the flexible film configuring the container, for hygiene reasons and to ensure a proper barrier, in particular to light and moisture. A pack comprising such a spout is for example described in European Patent Application EP 16184302.4 belonging to the same applicant, where the spout comprises two parts relatively moveable with respect to each other for adopting different positioning. The spout is initially provided overwrapped by the flexible film configuring the container and, when it is arranged in a beverage preparation device, it is first pierced to be engaged with a corresponding device part and to inject a fluid, typically water, inside the container, in order to prepare the beverage; then, the two parts of the spout are moved relatively to each other in order to allow the dispensing of the beverage and then closing it back to avoid dripping.

In the packs previously described, like for example in WO2011/054402 A1, it would be highly desirable, for product quality reasons and for hygiene, to ensure that the pack used to prepare the beverage has not been previously pierced nor used: it is important to note that the products comprised inside these packs need to be maintained in a fresh and controlled atmosphere in order to guarantee a proper hygiene. Reusing the same pack could originate serious hygienic problems that must be avoided. Moreover, it is very important to know the positioning of the spout (i.e. the relative positioning of its parts) as, for example, if the overwrapping film has not been opened and water is injected at pressure in the pack, the pack may explode. Similarly, it would be desirable to know that the spout has been reclosed, before the pack is removed from the beverage preparation machine, in order to avoid dripping.

Using for example a rotary encoder in the motor driving the movement of the two parts of the spout relative to each other, thus converting the angular position or motion of the driving shaft into an analogue or digital signal to indicate the position of the shaft (i.e. working as an angle transducer) would be complex and expensive. Therefore, there exists the need to provide a system for indicating that a pack is used for the first time and also to provide the positioning or orientation of the spout (of the two parts of the spout) within the pack, in a simple and cost effective way. The present invention comes to provide a solution to these needs, as it will be further explained. The invention also aims at other objects and particularly at the solution of other problems as will appear in the rest of the present description.

### Summary of the invention

According to a first aspect, the invention relates to a spout comprising at least two parts relatively moveable with respect to each other such that at least one of the two parts of the spout comprise means presenting a measurable resistance to being connected to an engaging part of a beverage preparation device and/or to the relative movement of the two parts of the spout.

Preferably, the means comprise piercable parts arranged at least in one of the two frontal parts of the spout and/or in the lower part of the spout. Also, the means may further comprise one or a plurality of indents or bumps.

Typically, the indents or bumps are designed as to number, geometry and position in order to control the connection of the beverage preparation device to the spout and/or the movement of the two parts of the spout with respect to each other.

According to a second aspect, the invention relates to a pack for preparing a food or beverage product comprising a spout as the one described and a container configured to comprise a product to prepare the said food or beverage product.

Typically, in the pack according to the invention, the container is configured by at least one flexible film folded in order to shape an enclosed space where the food or beverage product is arranged.

According to a preferred embodiment, in the pack of the invention, the flexible film is configured overwrapping the spout in its entirety except for the part of the spout which is in direct communication with the inner volume of the container.

Typically, the pack is configured for allowing the injection of a fluid through the spout and to create a jet inside the volume of the container to prepare the food or beverage product.

Yet according to another aspect, the invention relates to a system for preparing a food or beverage product comprising a pack as the one described comprising a product and a beverage preparation device that will introduce a fluid in the form of a jet inside the volume of the pack.

Typically, in the system of the invention, the beverage preparation device comprises a control unit configured for measuring along time the resistance of the connection of the beverage preparation device to the spout and the resistance of the relative movement of the two parts of the spout.

Preferably, in the system of the invention, the beverage preparation device comprises a control unit configured for measuring along time, during the food or beverage preparation, the current provided by a driving motor driving the connection of the device to the spout of the pack and also driving the movement of the two parts of the spout relative to each other.

The control unit in the system of the present invention is typically configured to transform the current value of the driving motor into a motor torque or a resistance force value along time, during the food or beverage preparation.

Preferably, in the system of the invention, the control unit is configured to compare the resistance value or the motor torque value with a referential threshold resistance or torque value, respectively, for a pack not yet used.

Typically, in the system of the invention, the control unit monitors the resistance profile along time to determine the phase or stage in the food or beverage preparation process.

Yet according to another aspect, the invention relates to a method for determining if a food or beverage pack has been previously used in a system for preparing a food or beverage product as described, the method comprising the steps of:
- monitoring along time the resistance of the connection of the device to the spout of the pack and also the resistance of the relative movement of the two parts of the spout;
- comparing the value of the resistance with a referential resistance value for a pack not previously used;
- taking an action (for example, warning the consumer or stopping the process) when the resistance value is lower than the referential resistance value for a pack not previously used.

Typically, in the method for determining if a food or beverage pack has been previously used in a system for preparing a food or beverage product as described, the resistance of the connection of the device to the spout of the pack and also the resistance of the relative movement of the two parts of the spout is measured by monitoring the current from the driving motor driving the connection to the spout and the relative movement of the two parts of the spout.

Preferably, the method for determining the phase or stage in a food or beverage preparation process in a system for preparing a food or beverage product as described comprises the steps of:
- monitoring along time the resistance of the connection of the device to the spout of the pack and also the resistance of the relative movement of the two parts of the spout;
- determining through the resistance profile the phase or stage in the food or beverage preparation process.

In the method of the invention, the phase or stage in the food or beverage preparation process shall be understood as the step of the said preparation, meaning when the pack has been inserted or arranged in the preparation device, when the pack has been pierced for the introduction of the jet of fluid, when the spout is open for the delivery of the prepared beverage or food, or when the spout is reclosed (for avoiding dripping) before the pack is going to be removed from the food or beverage preparation device, for example.

Preferably, in the method for determining the phase or stage in a food or beverage preparation process in a system for preparing a food or beverage product according to the invention, the resistance profile is determined by monitoring the current from the driving motor driving the connection to the spout and the relative movement of the two parts of the spout.

### Brief description of the drawings

Further features, advantages and objects of the present invention will become apparent for a skilled person when reading the following detailed description of non-limiting embodiments of the present invention, when taken in conjunction with the appended drawings, in which:
Figures 1a-c show different views of a system for flexible food or beverage packs according to the present invention, showing the way the beverage preparation machine pierces the pack and moves the spout linearly downwards to allow dispensing.
Figures 2a-c show a system for flexible food or beverage packs according to the present invention, showing the way the beverage preparation machine pierces the pack (Figures 2a-b) and a graph showing the variation of the driving motor torque when the pack is pierced (Figure 2c).
Figures 3a-c show a system for flexible food or beverage packs according to the present invention, showing the way the beverage preparation machine moves the spout linearly downwards to allow dispensing (Figures 3a-b) and a graph showing the variation of the driving motor torque when the spout moves downwards (Figure 3c).
Figures 4a-b show the variation of the driving motor torque when the pack is pierced and when the beverage preparation machine moves the spout linearly downwards to allow dispensing, in a new pack and in a pack already used, respectively.
Figures 5a-e show a system for flexible food or beverage packs according to a second embodiment of the present invention, showing the way the beverage preparation machine pierces the pack (Figures 5a-d) and a graph showing the variation of the driving motor torque when the pack is pierced (Figure 5e).
Figures 6a-d show a system for flexible food or beverage packs according to a second embodiment of the present invention, showing the way the beverage preparation machine moves the spout linearly downwards to allow dispensing (Figures 6a-c) and a graph showing the variation of the driving motor torque when the spout moves downwards (Figure 6d).
Figure 7 represents a graph showing the variation of the driving motor torque first when the pack is pierced and then when the spout is moved linearly downwards to allow dispensing, according to a second embodiment of the present invention.
Figures 8a-c show different graphs showing the variation of the driving motor torque first when the pack is pierced and then when the spout is moved linearly downwards to allow dispensing, according to a second embodiment of the present invention, designed depending on the measurement resolution and spout design constraints.
Figure 9 shows a general overview of a flexible food or beverage pack used in the system of the present invention.

### Detailed description of exemplary embodiments

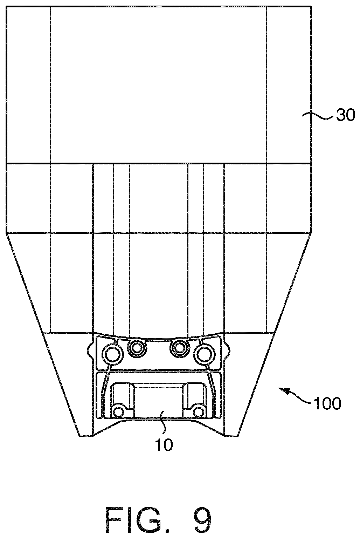

As previously described, the invention relates to a system for flexible food or beverage packs 100: the system of the invention comprises a flexible food or beverage pack 100 and a beverage preparation machine, where the pack will be inserted and a food or beverage product will be prepared and delivered. A representative pack 100 according to the invention is shown in Figure 9, the pack comprising a container 30 and a fitment assembly or spout 10. The container 30 is configured by one or more flexible sheets overwrapping the spout 10, such that only the part of the spout in communication with the inner volume of the container 30 is not covered by a film or sheet. The pack 100 used in the system of the invention is known as a flexible sachet or pouch.

The spout 10 in the pack of the invention is as the one described in document EP 16184302.4 belonging to the same applicant, and herewith incorporated by reference, in its entirety. The spout comprises two parts, 11 and 12, moveable with respect to each other, being typically injected elements in plastic. Typically, a primary part 11 is fixed to the beverage preparation device and a secondary part 12 moves linearly with respect to the said fixed part 11. When the pack 100 is in its initial position, the spout 10 is overwrapped and the communication to the outside of the pack is closed, for hygienic reasons. The pack shown in Figure 9 represents such an initial position. Once the secondary part 12 moves with respect to the primary part 11, the communication to the outside of the pack 100 is opened and so the beverage or food product can be delivered.

Typically, as disclosed in EP 16184302.4, the content of the container 30 is typically a powder product that will be dissolved by the addition of water, in order to produce a food or beverage product.

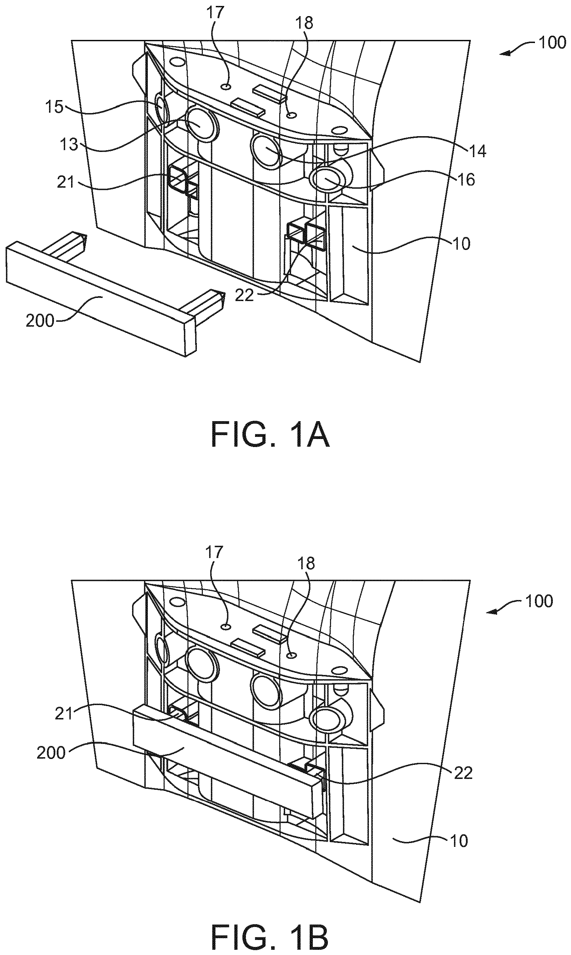

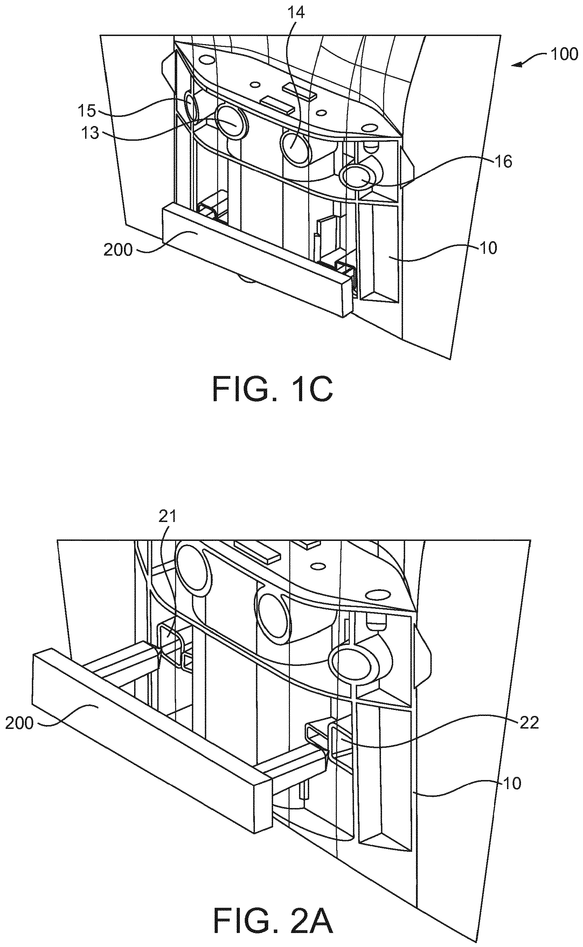

Looking at Figure 1a, a piercing element (not shown) in the beverage dispensing device, typically configured as a needle, comes to pierce the flexible sheet overwrapping at least one of the piercing holes 13, 14: the piercing element in the device can also be configured as a double needle (two parallel needles) piercing at the same time both piercing holes 13, 14. The piercing element comes to pierce the flexible sheet over the piercing hole or holes 13, 14 and injects water at pressure that goes into the inner volume of the container 30 at high speed through the small injecting holes 17, 18: the configuration of the piercing holes leading internally to injecting holes of a very low diameter converts the high pressure water injected by the piercing element into one or two high velocity jets, which are driven into the container 30: the high velocity jets allow a good dissolution of the product inside the pouch, typically a powder. The beverage preparation device preferably fixes the spout 10 (in particular the primary part of it 11) by means of attaching holes 15, 16 as represented in Figure 1a. A connecting element 200 from the beverage preparation device is arranged to pierce the film or sheet overwrapping two displacing holes 21, 22: also, this connecting element 200 is configured to displace linearly downwards the secondary part 12 of the spout with respect to the primary part 11 that is typically fixed. Figure 1b shows the moment when the connecting element 200 in the preparation device pierces the displacing holes 21, 22 in the secondary part 12 of the spout. Figure 1c represents the position in which the secondary part 12 has been moved linearly downwards to its full travel with respect to the primary part 11 (in this position shown in Figure 1c, as it will be further described, the product can be delivered to the outside of the pack).

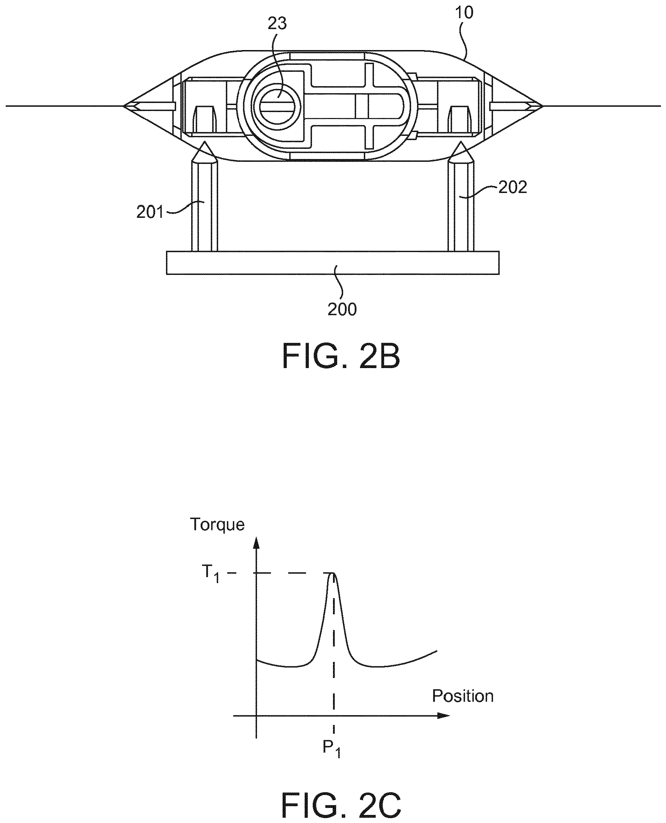

Figure 2a shows a further view of the connecting element 200 ion the device in the moment when it is going to pierce the displacing holes 21, 22 in the secondary part 12 of the spout. Figure 2b shows in detail the two piercing elements 201, 202 in the connecting element 200 of the device configured, as previously descried, to first pierce the film overwrapping the outside of the displacing holes 21, 22 and then arranged to move downwards the secondary part 12 of the spout with respect to the primary part 11 (typically fixed to the beverage preparation device). The communication from the inner volume of the container 30 towards the spout 10 and to the outside of it (to deliver the prepared product or beverage) is done by means of an outlet duct 23, as represented on top view (side inner volume of the container) in Figure 2b.

As described, the spout itself is composed of two injected plastic parts 11 and 12, which can be moved (typically translated) with respect to each other. Typically, there are two movements of the device with respect to the spout and of the parts of the spout themselves, to achieve the following two functions: 1) piercing the flexible sheet overwrapping the frontal part of the spout (piercing the displacing holes 21, 22) during a first horizontal movement of the connecting element 200 towards the pack 100, and 2) opening and/or closing actively the product path through the outlet duct 23, during the product preparation process (typically a first vertical movement downwards of the secondary part 12 with respect to the primary part 11 piercing the lower flexible sheet overwrapping the lower side of the spout 10 to allow the dispensing of the food or beverage product prepared through the duct 23 and, once the dispensing has finished, the same movement but in opposite direction, upwards, to reclose the communication of the inner volume of the container 30 to the outside of the pack through the outlet duct 23, in order to avoid any dripping (this would be the final position when the pack 100 can be removed from the beverage preparation device).

The movement in horizontal (piercing function 1) described above) and in vertical (preparation process function 2) described above) of the connecting element 200 is carried out by a driving motor (not shown) in the beverage preparation device. The torque of the driving motor is proportional to the product of the force by the distance, and the motor current thus varies according to the load torque applied. Taking this into consideration, the driving motor torque presents a peak when the connecting element 200 has to pierce the flexible film or sheet overwrapping the front part of the displacing holes 21, 22 (i. e. when a certain resistance presented by this film needs to be overcome): this is represented in Figure 2c, by the position P₁ (when this piercing takes place) when the driving motor needs a higher torque T₁. In fact, according to the invention, it is the motor current which is measured along time: this current is an image of the motor torque, which provides information on the resistance to the movement of the spout piercing and the spout opening.

The aim of the invention is, as described in the Background, that a pack 100 is only used once, for obvious hygiene reasons. Therefore, this high peak of torque T₁ will only take place in a non-used pack. Also, when a pack is manufactured having a defect, this manufacturing defect can also be detected by an abnormal value of T₁.

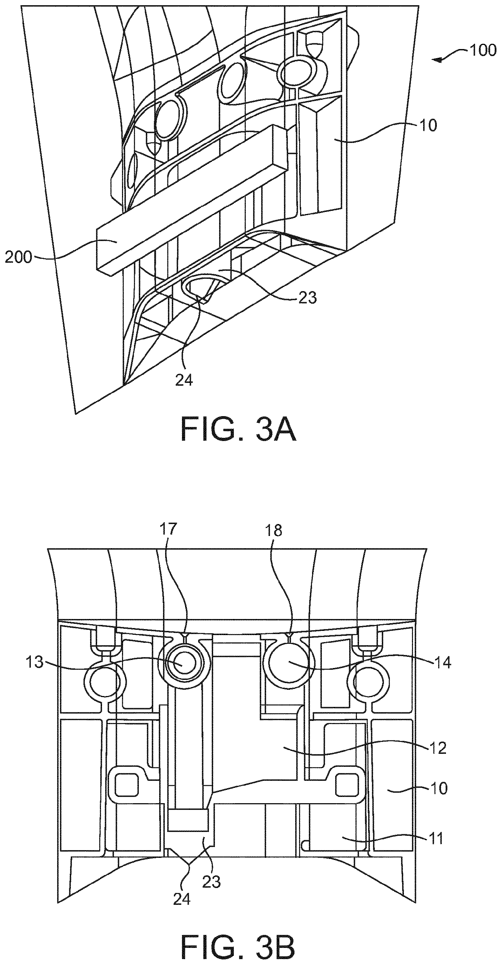

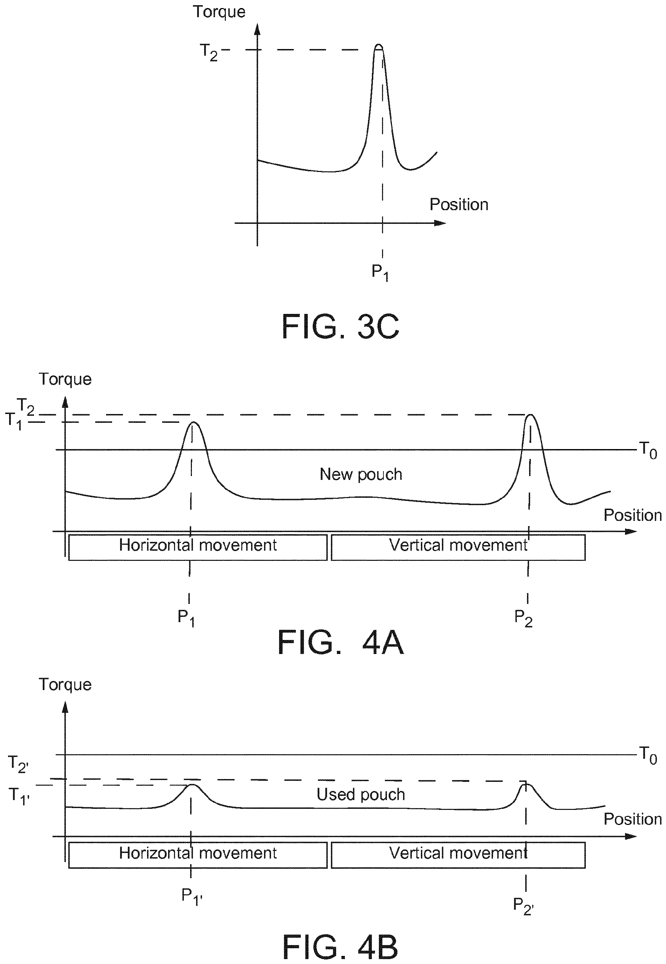

When the secondary part 12 of the spout 10 is moved downwards by the connecting element 200, the overwrapping flexible sheet that envelops the lower part of the spout 10 is tear open by an outlet piercing part 24 of the said outlet duct 23, as shown in detail in Figure 3a. By this downwards vertical movement of the secondary part 12, the communication of the inner volume of the container 30 towards the outlet duct 23 is made free (the upper positioning of the secondary part 23 in Figure 2b blocking the passage of the content of the container 30 to the outside of the pack) and also the wrapping sheet or film over the lower side of the spout 10 is tear open by the movement downwards of the outlet duct 23, being provided with an outlet piercing part 24 on one of its ends, as shown in detail in Figures 3a and 3b. Therefore, the beverage or food product prepared inside the pack can be dispensed through the outlet duct 23. In this case, the driving motor torque exerts a higher peak when the outlet piercing part 24 pierces or tears open the lower sheet over the spout 10. This higher torque peak is represented by T₂ in Figure 3c, P₂ being the position when the outlet piercing part 24 pierces and tears open the flexible sheet. It is also clear that what has just been described will occur only in a pack that has not been previously used, so this is a way to detect non hygienic conditions (not safe for the consumer) and/or abnormal configurations of manufacturing defects of an overwrapped pack.

Therefore, by measuring the driving motor torque and monitoring it with time, it is possible to control the position of the pack with respect to the beverage preparation device and also the positon of the two parts of the spout relative to each other. That is to say, by measuring the torque value applied by the driving motor, it is possible to determine when the connecting element 200 of the device has pierced the pack and has connected to the spout (we have to be in position P₁ with a torque peak of T₁) and when the secondary part 12 of the spout has linearly moved downwards with respect to the primary fixed part 11, and so the film has been pierced by the piercing part 24 of the outlet, moving downwards (we have to be in position P₂ with a torque peak of T₂).

Figure 4a represents, for a new pack 100 (i.e. not previously used), the high peaks of torque values over a calibrated referential torque value T₀ in a representative pack 100 as described: during the horizontal movement of the connecting element 200, a high peak of torque T₁ will take place in the position P₁ when the film overwrapping the displacing holes 21, 22 is pierced and a second torque peak T₂ will occur in position P₂ during the vertical movement of the secondary part 12 of the spout with respect to the fixed primary part 11, when the film is tear or pierced open by the outlet piercing part 24 of the outlet duct 23. The value of referential torque T₀ will be initially calibrated for a new pack or pouch not previously used, so the values of torque peaks T₁ and T₂ for the horizontal piercing (displacing holes 21, 22) and for the vertical piercing (tearing open the lower film through the outlet piercing part 24) will be higher that the referential torque of T₀. When looking at Figure 4b, for a pack already used, when the horizontal piercing has already been done (so the connecting element 200 has already pierced the displacing holes 21, 22), the torque value of T₁, that the driving motor will take for piercing already-pierced holes 21, 22 (position P_{1'}) will be below the referential value of T₀. In a similar way, when the lower film part overwrapping the spout 10 has already been previously pierced, the torque value that the motor will take for piercing this film (position P_{2'}) with the outlet piercing part 24 will be a value of T_{2'} that will be below the referential value T₀. Therefore, the graph shown in Figure 4b represents the positions and torque values from a driving motor in the case of a pouch that has already been used (values of torque are below the referential torque value To).

In the system of the invention, the beverage preparation device will comprise a control unit (not shown) that will receive the data of the torque applied by the driving motor with time (i.e. when a beverage or food product is prepared from a pack): in fact, the control unit will receive the data of the current applied by the motor along time, that will be transferred to a motor torque value. The control unit will further have the calibrated referential value of torque of T₀ for a new pack or pouch and will compare the torque values for the horizontal movement (of the connecting element 200 with respect to the spout) and for the vertical movement (of the secondary part 12 with respect to the primary part 11) with the said value T₀ to determine if these are higher. If so, the beverage preparation process will take place but, if not, the control unit will command the beverage preparation device to stop the preparation process. Moreover, the control unit in the beverage preparation device will communicate the device the position of the pouch with respect to the device (that is, if the pouch has been horizontally pierced by the connecting element 200) and will also communicate the device the position of the parts of the spout (that is, if the secondary part has moved and has pierced the film overwrapping the lower part so it has opened the outlet for allowing dispensing of the beverage prepared).

The control unit in the device will therefore have a double function. It will be able to detect the position of the pouch with respect to the device and also the position of the parts of the spout, that is, it will detect the status in the beverage preparation process, by monitoring or measuring with time the driving motor torque values (when a first peak of torque is detected, the device will know that the pack has been pierced horizontally, and when a second peak torque is detected, the device will be aware that the overwrapping film under the spout has been also pierced and the outlet conduit is open). Also, the control unit will be able to detect if the pack or pouch has been used already or not, by comparing the driving motor torque value with the referential calibrated torque value of To: therefore, by detecting if the pack or pouch has been previously used, the device will stop preparation as it will detect a risk of hygiene for the consumer.

One of the two or the two peak torque values (T₁ or T₂; T_{1'} or T_{2'}) can be lower than the referential torque of T₀: this will indicate that it has been previously pierced or that it has a manufacturing defect, and so will make the beverage preparation device stop the preparation process.

The control unit of the beverage preparation device in the system of the invention is configured to carry out the following method steps:
- it receives the value of the driving motor torque (the motor current) with time, during the preparation of the food or beverage product;
- it checks when a peak of torque takes place and so informs the beverage preparation device of the status in the beverage preparation process;
- it compares peak torque values (T₁, T₂; T_{1'}, T_{2'}) with a referential torque value (T0) for a pack not used, and when a peak torque value is lower than the referential value (T₀), it commands the beverage preparation device to stop the preparation process.

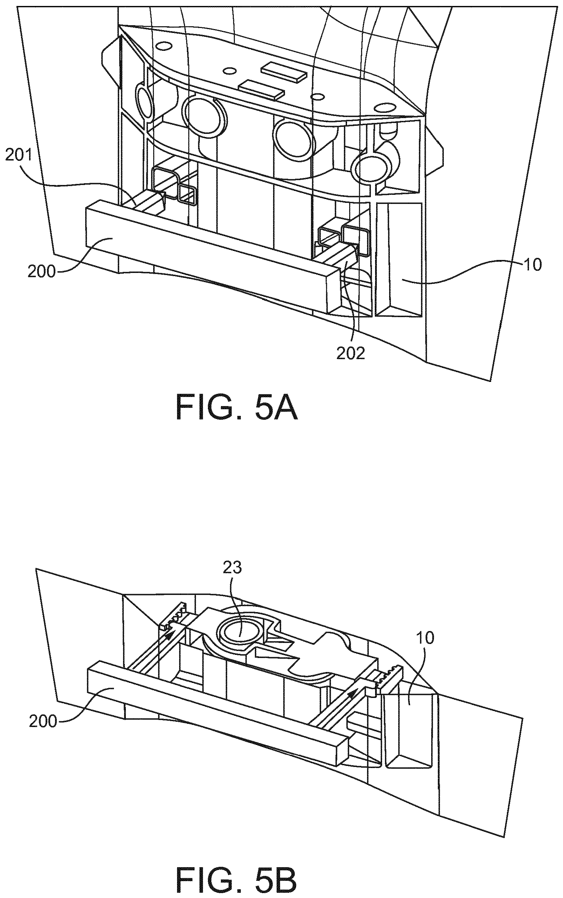

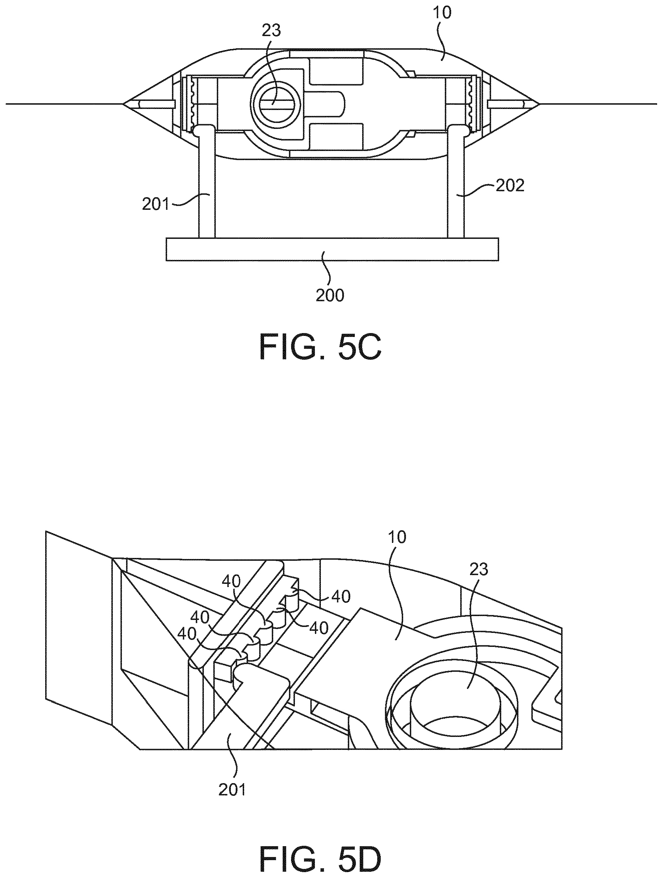

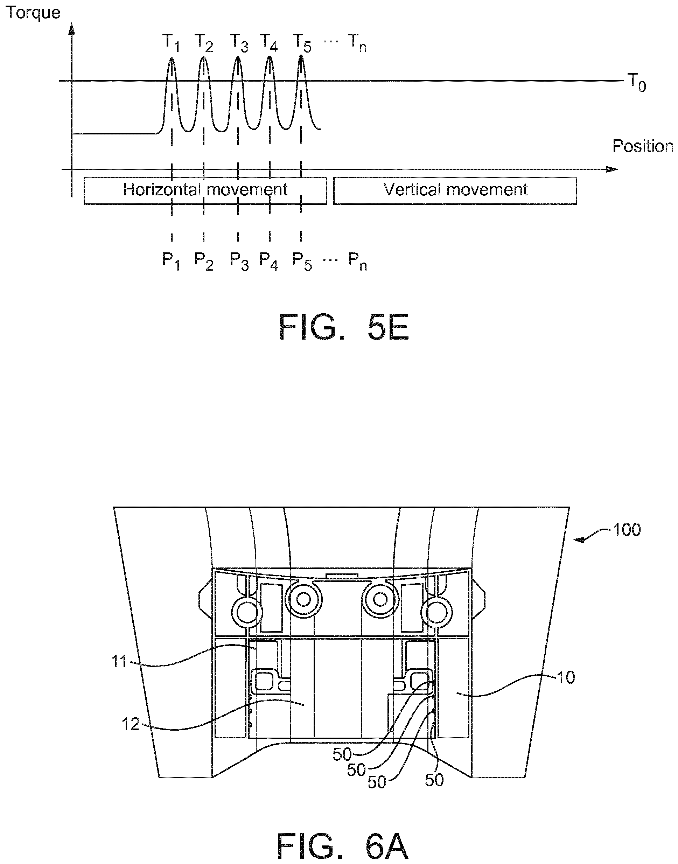

Figures 5a-e show a different embodiment of the spout 10, comprising horizontal piercing bumps 40 in the path of the connecting element 200 (of the piercing elements 201, 202), as represented in more detail in Figure 5d. These bumps 40 represent obstacles placed at pre-defined locations along the travelling path of the connecting element 200 so it is possible to know the position of the said connecting element 200 of the device with respect to the spout 10. With such a configuration of the spout 10, the graph torque and position obtained is similar as the one shown in Figure 5e: in the horizontal movement (frontally piercing of the pack with the connecting element) there are several torque peaks (several peak torque values over the referential calibration value of torque To) represented by T₁, T₂, T₃, T₄, T₅, ... Tₙ, n being the number of bumps 40, occurring at positions or moments P₁, P₂, P₃, P₄, P₅, ... Pₙ, respectively.

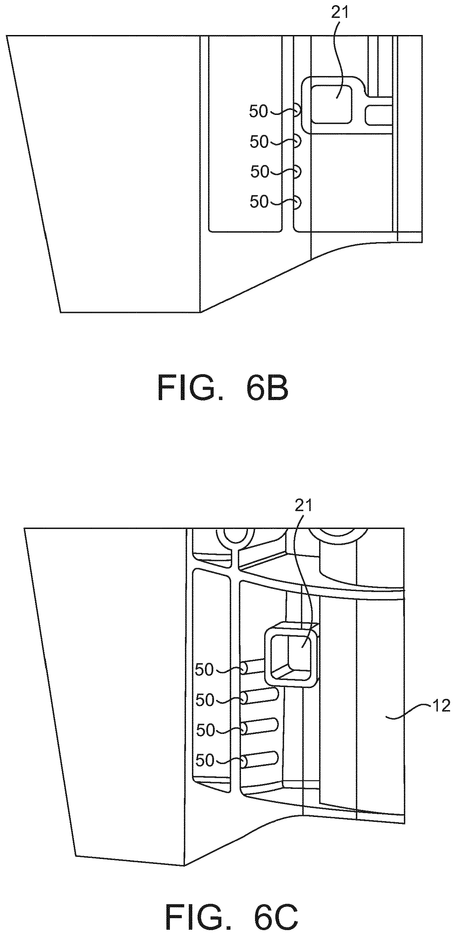

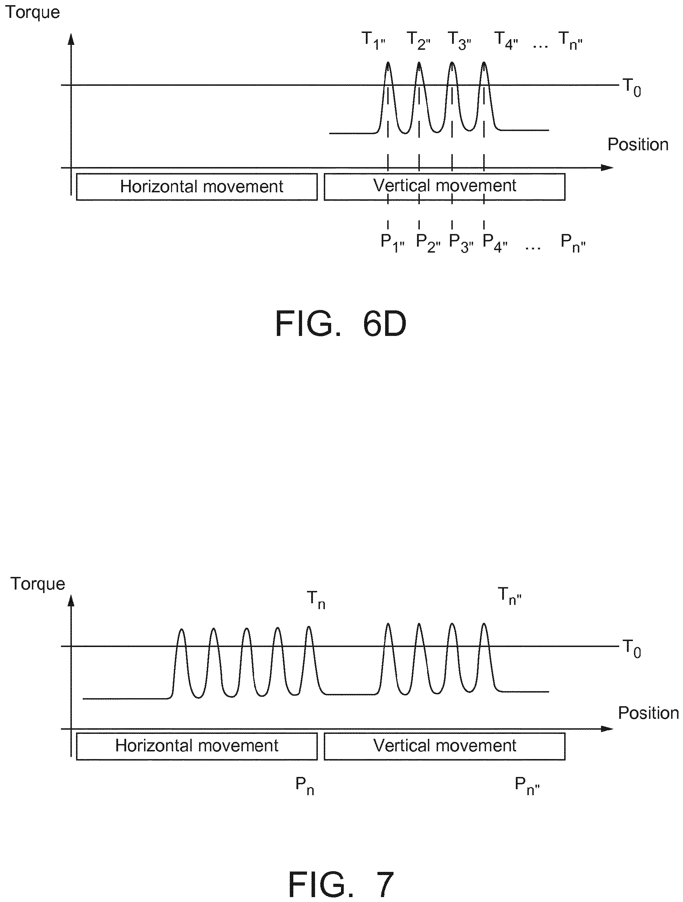

In a similar manner, bumps 50 can also be arranged in the vertical path of the movement of the secondary part 12 of the spout 10 with respect to the primary part 11 of the spout 10, as represented in Figures 6a, 6b or 6c for example. The position of the secondary part 12 with respect to the primary part 11 is then known by controlling the number of bumps 50 already passed. Looking at Figure 6d, the vertical movement of the secondary part of the spout can be followed by the torque peaks: each torque peak T_{1"}, T_{2"}, T_{3"}, T_{4"}, ... T_{n"}, n being the number of bumps 50, corresponds to a bump 50 occurring at a position P_{1"}, P_{2"}, P_{3"}, P_{4"}, ... P_{n"} respectively.

The complete movement in horizontal for the frontal piercing of the pack and in vertical for the opening of the outlet while the preparation of the food or beverage product takes place is represented in Figure 7. This replaces a standard motor encoder.

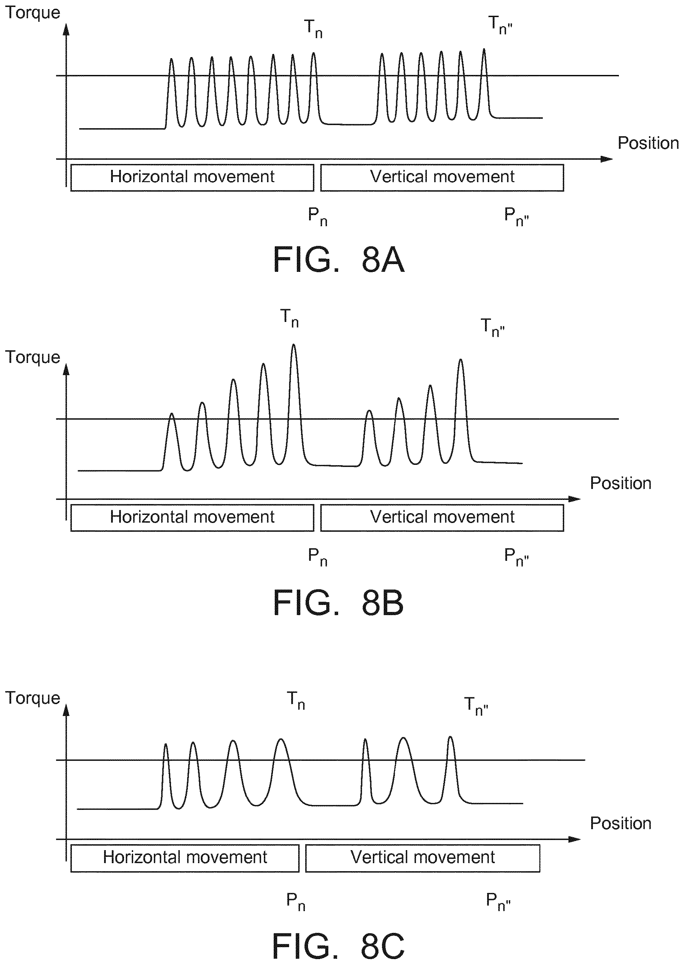

Depending on the measurement resolution and on the spout design constraints, the number of peaks, their height and their width can be varied depending on the design made for the obstacles, that is, depending on the design made for the horizontal bumps 40 and for the vertical bumps 50. Figures 8a, 8b and 8c represent exemplary design variations providing variations in the number, amplitude and period of the torque peaks with time. The indents or bumps are designed as to number, geometry and position in order to control the connection of the beverage preparation device to the spout and/or the movement of the two parts of the spout with respect to each other: the different geometries of the bumps or indents create different resistance profiles, and so create different torque/current profiles in the motor.

Even when the Description refers to measurement of electrical current from the driving motor which is converted into motor torque, the invention can be more broadly applied to measuring the resistance offered by the connection of the beverage preparation device (element 200) to the spout 10 and the resistance offered when the two parts of the spout 10 (parts 11, 12) move relatively to each other. The measuring of this resistance can be done by a strain gauge or the like. However, the preferred embodiment of the invention will be that of measuring the electrical current of the driving motor which will be translated into motor torque value or a motor resistance value.

Without departing from the aim and scope of the present invention, the various detections presented above can be combined too, as desired: laminate or sheet piercing detection in the horizontal movement of the device towards the pack or in the vertical displacement of one part of the spout with respect to the other, bumps in the horizontal or in the vertical movement of the spout, etc.

## Claims

1. Spout (10) comprising at least two parts (11, 12), **characterized in that** said parts are relatively moveable with respect to each other such that at least one of the two parts (11, 12) of the spout comprise means presenting a measurable resistance to being connected to an engaging part of a beverage preparation device and/or to the relative movement of the two parts (11, 12) of the spout.

2. Spout (10) according to claim 1 wherein the means comprise piercable parts arranged at least in one of the two frontal parts of the spout and/or in the lower part of the spout.

3. Spout (10) according to any of the previous claims wherein the means further comprise one or a plurality of indents or bumps (40, 50).

4. Spout (10) according to claim 3 wherein the indents or bumps (40, 50) are designed as to number, geometry and position in order to control the connection of the beverage preparation device to the spout (10) and/or the movement of the two parts (11, 12) of the spout with respect to each other.

5. Pack (100) for preparing a food or beverage product comprising a spout (10) according to any of claims 1-4 and a container (30) configured to comprise a product to prepare the said food or beverage product.

6. Pack (100) according to claim 5 wherein the container (30) is configured by at least one flexible film folded in order to shape an enclosed space where the food or beverage product is arranged.

7. Pack (100) according to claim 6 wherein the flexible film is configured overwrapping the spout (10) in its entirety except for the part of the spout which is in direct communication with the inner volume of the container (30).

8. Pack (100) according to any of claims 5-7 configured for allowing the injection of a fluid through the spout (10) and to create a jet inside the volume of the container (30) to prepare the food or beverage product.

9. System for preparing a food or beverage product comprising a pack (100) according to any of claims 5-8 comprising a product and a beverage preparation device that will introduce a fluid in the form of a jet inside the volume of the pack (100).

10. System according to claim 9 wherein the beverage preparation device comprises a control unit configured for measuring along time the resistance of the connection of the beverage preparation device to the spout (10) and the resistance of the relative movement of the two parts (11, 12) of the spout.

11. System according to claim 9 wherein the beverage preparation device comprises a control unit configured for measuring along time, during the food or beverage preparation, the current provided by a driving motor driving the connection of the device to the spout (10) of the pack and also driving the movement of the two parts (11, 12) of the spout relative to each other.

12. System according to claim 11 wherein the control unit is configured to transform the current value of the driving motor into a motor torque or a resistance force value along time, during the food or beverage preparation.

13. System according to any of claims 11 or 12 wherein the control unit is configured to compare the resistance value or the motor torque value with a referential threshold resistance or torque value, respectively, for a pack not yet used.

14. System according to any of claims 10 or 12 wherein the control unit monitors the resistance profile along time to determine the phase or stage in the food or beverage preparation process.

15. Method for determining if a food or beverage pack has been previously used in a system for preparing a food or beverage product according to any of claims 9-14 comprising the steps of:
- monitoring along time the resistance of the connection of the device to the spout (10) of the pack (100) and also the resistance of the relative movement of the two parts (11, 12) of the spout;
- comparing the value of the resistance with a referential resistance value for a pack (100) not previously used;
- taking an action when the resistance value is lower than the referential resistance value for a pack not previously used.

16. Method for determining if a food or beverage pack has been previously used in a system for preparing a food or beverage product according to claim 15 wherein the resistance of the connection of the device to the spout (10) of the pack (100) and also the resistance of the relative movement of the two parts (11, 12) of the spout is measured by monitoring the current from the driving motor driving the connection to the spout (10) and the relative movement of the two parts (11, 12) of the spout (10).

17. Method for determining the phase or stage in a food or beverage preparation process in a system for preparing a food or beverage product according to any of claims 9-14 comprising the steps of:
- monitoring along time the resistance of the connection of the device to the spout (10) of the pack and also the resistance of the relative movement of the two parts (11, 12) of the spout;
- determining through the resistance profile the phase or stage in the food or beverage preparation process.

18. Method for determining the phase or stage in a food or beverage preparation process in a system for preparing a food or beverage product according to claim 17 wherein the resistance profile is determined by monitoring the current from the driving motor driving the connection to the spout (10) and the relative movement of the two parts (11, 12) of the spout (10).

## Patentansprüche

1. Ausguss (10), umfassend mindestens zwei Teile (11, 12),
**dadurch gekennzeichnet, dass** die Teile relativ zueinander relativ beweglich sind, so dass mindestens einer der beiden Teile (11, 12) des Ausgusses Mittel aufweist, die einen messbaren Widerstand gegen das Verbinden mit einem Eingriffsteil einer Getränkezubereitungsvorrichtung und/oder gegen die relative Bewegung der zwei Teile (11, 12) des Ausgusses aufweisen.

2. Ausguss (10) nach Anspruch 1, wobei die Mittel durchstechbare Teile umfassen, die mindestens in einem der beiden vorderseitigen Teile des Ausgusses und/oder im unteren Teil des Ausgusses angeordnet sind.

3. Ausguss (10) nach einem der vorstehenden Ansprüche, wobei die Mittel ferner einen oder mehrere Einbuchtungen oder Höcker (40, 50) umfassen.

4. Ausguss (10) nach Anspruch 3, wobei die Einbuchtungen oder Höcker (40, 50) in Anzahl, Geometrie und Position so ausgebildet sind, dass sie die Verbindung der Getränkezubereitungsvorrichtung mit dem Ausguss (10) und/oder die Bewegung der beiden Teile (11, 12) des Ausgusses zueinander steuern.

5. Packung (100) zum Zubereiten eines Lebensmittel- oder Getränkeprodukts, umfassend einen Ausguss (10) nach einem der Ansprüche 1 bis 4 und einen Behälter (30), der konfiguriert ist, um ein Produkt zu umfassen, um das Lebensmittel- oder Getränkeprodukt zuzubereiten.

6. Packung (100) nach Anspruch 5, wobei der Behälter (30) durch mindestens eine flexible Folie konfiguriert ist, die gefaltet ist, um einen umschlossenen Raum zu formen, in dem das Lebensmittel- oder Getränkeprodukt angeordnet ist.

7. Packung (100) nach Anspruch 6, wobei die flexible Folie so konfiguriert ist, dass sie den Ausguss (10) in seiner Gesamtheit mit Ausnahme des Teils des Ausgusses, der in direkter Verbindung mit dem Innenvolumen des Behälters (30) steht, umhüllt.

8. Packung (100) nach einem der Ansprüche 5 bis 7, die konfiguriert ist, um die Injektion eines Fluids durch den Ausguss (10) zu ermöglichen und einen Strahl innerhalb des Volumens des Behälters (30) zu erzeugen, um das Lebensmittel- oder Getränkeprodukt zuzubereiten.

9. System zur Zubereitung eines Lebensmittel- oder Getränkeprodukts, das eine Packung (100) nach einem der Ansprüche 5 bis 8 umfasst, umfassend ein Produkt und eine Getränkezubereitungsvorrichtung, die ein Fluid in Form eines Strahls innerhalb des Volumens der Packung (100) einbringt.

10. System nach Anspruch 9, wobei die Getränkezubereitungsvorrichtung eine Steuereinheit umfasst, die zum Messen, im Zeitverlauf, des Widerstands der Verbindung der Getränkezubereitungsvorrichtung mit dem Ausguss (10) und des Widerstands der relativen Bewegung der zwei Teile (11, 12) des Ausgusses konfiguriert ist.

11. System nach Anspruch 9, wobei die Getränkezubereitungsvorrichtung eine Steuereinheit umfasst, die zum Messen im Zeitverlauf, während der Lebensmittel- oder Getränkezubereitung, des durch einen Antriebsmotor bereitgestellten Stroms konfiguriert ist, der die Verbindung der Vorrichtung mit dem Ausguss (10) der Packung antreibt und auch die Bewegung der zwei Teile (11, 12) des Ausgusses relativ zueinander antreibt.

12. System nach Anspruch 11, wobei die Steuereinheit konfiguriert ist, um während der Lebensmittel- oder Getränkezubereitung den Stromwert des Antriebsmotors in ein Motordrehmoment oder einen Widerstandskraftwert im Zeitverlauf umzuwandeln.

13. System nach einem der Ansprüche 11 oder 12, wobei die Steuereinheit konfiguriert ist, um den Widerstandswert oder den Motordrehmomentwert mit einem Referenzschwellenwiderstands- bzw. -drehmomentwert für eine noch nicht verwendete Packung zu vergleichen.

14. System nach einem der Ansprüche 10 oder 12, wobei die Steuereinheit das Widerstandsprofil im Zeitverlauf überwacht, um die Phase oder Stufe in dem Lebensmittel- oder Getränkezubereitungsprozess zu bestimmen.

15. Verfahren zum Bestimmen, ob eine Lebensmittel- oder Getränkepackung zuvor in einem System zur Zubereitung eines Lebensmittel- oder Getränkeprodukts nach einem der Ansprüche 9 bis 14 verwendet wurde, umfassend die Schritte:
- Überwachen, im Zeitverlauf, des Widerstands der Verbindung der Vorrichtung mit den Ausguss (10) der Packung (100) und auch des Widerstands der relativen Bewegung der zwei Teile (11, 12) des Ausgusses;
- Vergleichen des Widerstandwerts mit einem Referenzwiderstandswert für eine nicht zuvor verwendete Packung (100);
- Anwenden einer Aktion, wenn der Widerstandswert niedriger ist als der Referenzwiderstandswert für eine nicht zuvor verwendete Packung.

16. Verfahren zum Bestimmen, ob eine Lebensmittel- oder Getränkepackung zuvor in einem System zur Zubereitung eines Lebensmittel- oder Getränkeprodukts nach Anspruch 15 verwendet wurde, wobei der Widerstand der Verbindung der Vorrichtung mit dem Ausguss (10) der Packung (100) und auch der Widerstand der relativen Bewegung der zwei Teile (11, 12) des Ausgusses durch Überwachen des Stroms von dem Antriebsmotor, der die Verbindung mit dem Ausguss (10) und die relative Bewegung der zwei Teile (11, 12) des Ausgusses (10) antreibt, gemessen wird.

17. Verfahren zum Bestimmen der Phase oder Stufe in einem Lebensmittel- oder Getränkezubereitungsprozess in einem System zur Zubereitung eines Lebensmittel- oder Getränkeprodukts nach einem der Ansprüche 9 bis 14, umfassend die Schritte:
- Überwachen des Widerstands der Verbindung der Vorrichtung mit dem Ausguss (10) der Packung und auch des Widerstands der relativen Bewegung der zwei Teile (11, 12) des Ausgusses;
- Bestimmen der Phase oder Stufe im Lebensmittel- oder Getränkezubereitungsprozess durch das Widerstandsprofil.

18. Verfahren zum Bestimmen der Phase oder Stufe in einem Lebensmittel- oder Getränkezubereitungsprozess in einem System zur Zubereitung eines Lebensmittel- oder Getränkeprodukts nach Anspruch 17, wobei das Widerstandsprofil durch Überwachen des Stroms von dem Antriebsmotor, der die Verbindung mit dem Ausguss (10) und die relative Bewegung der zwei Teile (11, 12) des Ausgusses (10) antreibt, bestimmt wird.

## Revendications

1. Bec (10) comprenant au moins deux parties (11, 12), **caractérisé en ce que** lesdites parties sont relativement mobiles l'une par rapport à l'autre de telle sorte qu'au moins l'une des deux parties (11, 12) du bec comprend des moyens présentant une résistance mesurable au fait d'être relié à une partie de mise en prise d'un dispositif de préparation de boisson et/ou au mouvement relatif des deux parties (11, 12) du bec.

2. Bec (10) selon la revendication 1 dans lequel les moyens comprennent des parties perçables agencées au moins dans l'une des deux parties frontales du bec et/ou dans la partie inférieure du bec.

3. Bec (10) selon l'une quelconque des revendications précédentes dans lequel les moyens comprennent en outre un(e) ou une pluralité de renfoncements ou bosses (40, 50).

4. Bec (10) selon la revendication 3 dans lequel les renfoncements ou bosses (40, 50) sont conçus en ce qui concerne le nombre, la géométrie et la position afin de commander la liaison du dispositif de préparation de boisson au bec (10) et/ou le mouvement des deux parties (11, 12) du bec l'une par rapport à l'autre.

5. Emballage (100) permettant de préparer un produit alimentaire ou de boisson comprenant un bec (10) selon l'une quelconque des revendications 1 à 4 et un récipient (30) conçu pour comprendre un produit pour préparer ledit produit alimentaire ou de boisson.

6. Emballage (100) selon la revendication 5 dans lequel le récipient (30) est conçu avec au moins un film souple plié afin de mettre en forme un espace fermé où le produit alimentaire ou de boisson est agencé.

7. Emballage (100) selon la revendication 6 dans lequel le film souple est conçu pour recouvrir le bec (10) dans sa totalité à l'exception de la partie du bec qui est en communication directe avec le volume interne du récipient (30).

8. Emballage (100) selon l'une quelconque des revendications 5 à 7 conçu pour permettre l'injection d'un fluide à travers le bec (10) et pour créer un jet à l'intérieur du volume du récipient (30) pour préparer le produit alimentaire ou de boisson.

9. Système permettant de préparer un produit alimentaire ou de boisson comprenant un emballage (100) selon l'une quelconque des revendications 5 à 8 comprenant un produit et un dispositif de préparation de boisson qui va introduire un fluide sous la forme d'un jet à l'intérieur du volume de l'emballage (100).

10. Système selon la revendication 9 dans lequel le dispositif de préparation de boisson comprend une unité de commande configurée pour mesurer au fil du temps la résistance de la liaison du dispositif de préparation de boisson au bec (10) et la résistance du mouvement relatif des deux parties (11, 12) du bec.

11. Système selon la revendication 9 dans lequel le dispositif de préparation de boisson comprend une unité de commande configurée pour mesurer au fil du temps, pendant la préparation d'aliment ou de boisson, le courant fourni par un moteur d'entraînement entraînant la liaison du dispositif au bec (10) de l'emballage et entraînant également le mouvement des deux parties (11, 12) du bec l'une par rapport à l'autre.

12. Système selon la revendication 11 dans lequel l'unité de commande est configurée pour transformer la valeur de courant du moteur d'entraînement en un couple de moteur ou une valeur de force de résistance au fil du temps, pendant la préparation d'aliment ou de boisson.

13. Système selon l'une quelconque des revendications 11 ou 12 dans lequel l'unité de commande est configurée pour comparer la valeur de résistance ou la valeur de couple de moteur à une valeur seuil référentielle de résistance ou de couple, respectivement, pour un emballage non encore utilisé.

14. Système selon l'une quelconque des revendications 10 ou 12 dans lequel l'unité de commande surveille le profil de résistance au fil du temps pour déterminer la phase ou le stade dans le processus de préparation d'aliment ou de boisson.

15. Procédé permettant de déterminer si un emballage d'aliment ou de boisson a été précédemment utilisé dans un système permettant de préparer un produit alimentaire ou de boisson selon l'une quelconque des revendications 9 à 14 comprenant les étapes consistant à :
- surveiller au fil du temps la résistance de la liaison du dispositif au bec (10) de l'emballage (100) ainsi que la résistance du mouvement relatif des deux parties (11, 12) du bec ;
- comparer la valeur de la résistance à une valeur référentielle de résistance pour un emballage (100) non précédemment utilisé ;
- entreprendre une action lorsque la valeur de résistance est inférieure à la valeur référentielle de résistance pour un emballage non précédemment utilisé.

16. Procédé permettant de déterminer si un emballage d'aliment ou de boisson a été précédemment utilisé dans un système permettant de préparer un produit alimentaire ou de boisson selon la revendication 15 dans lequel la résistance de la liaison du dispositif au bec (10) de l'emballage (100) ainsi que la résistance du mouvement relatif des deux parties (11, 12) du bec est mesurée en surveillant le courant provenant du moteur d'entraînement entraînant la liaison du bec (10) et le mouvement relatif des deux parties (11, 12) du bec (10).

17. Procédé permettant de déterminer la phase ou le stade dans un processus de préparation d'aliment ou de boisson dans un système permettant de préparer un produit alimentaire ou de boisson selon l'une quelconque des revendications 9 à 14 comprenant les étapes consistant à :
- surveiller au fil du temps la résistance de la liaison du dispositif au bec (10) de l'emballage ainsi que la résistance du mouvement relatif des deux parties (11, 12) du bec ;
- déterminer par l'intermédiaire du profil de résistance la phase ou le stade dans le processus de préparation d'aliment ou de boisson.

18. Procédé permettant de déterminer la phase ou le stade dans un processus de préparation d'aliment ou de boisson dans un système permettant de préparer un produit alimentaire ou de boisson selon la revendication 17 dans lequel le profil de résistance est déterminé en surveillant le courant provenant du moteur d'entraînement entraînant la liaison au bec (10) et le mouvement relatif des deux parties (11, 12) du bec (10).
